# EUROPÄISCHE PATENTSCHRIFT

(11) **EP 2 151 336 B1**
(45) Veröffentlichungstag und Bekanntmachung des Hinweises auf die Patenterteilung: **13.04.2011**
(21) Anmeldenummer: 09450107.9
(22) Anmeldetag: 29.05.2009
(51) Int. Cl.: B60C 27/10

(54) **Spannschloss**
Tightener
Tendeur

(30) Priorität: 07.08.2008 EP 08450120
(43) Veröffentlichungstag der Anmeldung: 10.02.2010
(73) Patentinhaber: Pewag Schneeketten GmbH & Co KG, 9371 Brückl (AT)
(72) Erfinder: Pengg, Ägyd, 9020 Klagenfurt (AT); Berghold, Johann, 8063 Eggersdorf (AT); Niess, Bernhard, 8312 Ottendorf (AT); Kellner, Clemens, 8010 Graz (AT)
(74) Vertreter: Forsthuber, Martin

(56) Entgegenhaltungen:
- EP-A- 1 935 674
- AT-A1- 504 599
- AT-A4- 504 476
- DE-U1- 29 703 911
- US-A- 2 593 018

## Beschreibung

Die Erfindung betrifft eine Spannvorrichtung für eine auf ein Rad eines Fahrzeuges montierbare Gleitschutzkette mit einem Gehäuse und einem durch eine Gehäuseöffnung in das Gehäuse hineinziehbaren Spannstrang, wobei der Spannstrang innerhalb des Gehäuses an eine in Aufwickelrichtung vorgespannte, um ihre Achse drehbar gelagerte Wickelrolle angeschlossen ist, wobei an der Wickelrolle ein Klinkenkrad mit zumindest einer ihm zugeordneten Sperrklinke vorgesehen ist und der Spannstrang durch Eingreifen der Sperrklinke in das Klinkenrad entgegen seiner Spannrichtung blockierbar ist.

Spannvorrichtungen werden bei Gleitschutzketten verwendet, um nach der Montage einen unerwünschten Rücklauf des Spannstranges entgegen der Spannrichtung zu vermeiden. Eine mögliche Anordnung des Spannschlosses an der Gleitschutzkette bzw. des Spannstranges ist beispielsweise aus der AT 412 202 B bekannt geworden.

Eine gattungsbildende Spannvorrichtung wird z.B. in der DE 297 03 911 U1 vorgestellt. Bei dieser Spannvorrichtung ist ein Gehäuse vorgesehen, in welchem der Spannstrang auf eine Wickeltrommel aufgewickelt werden kann, die mit einem Klinkenrad drehfest verbunden ist. Die Wickeltrommel ist zum Aufwickeln des Spannstranges in der Aufwickelrichtung durch eine Feder vorgespannt. Das Aufwickeln des Spannstranges kann über einen außen am Gehäuse angebrachten Betätigungshebel ausgelöst werden. Nachteilig an dieser Vorrichtung ist die relativ unpraktische Handhabung des Betätigungshebels, der im Falle von Verschmutzung bzw. Vereisung auch leicht verklemmen kann.

Aus der AT 504 476 B und der AT 504 599 B sind Spannschlösser bekannt geworden, bei welchen ein Massestück vorgesehen ist, welches in einem montierten Zustand bei Rotation eines Rades durch die auftretende Fliehkraft in dem Spannschloss radial nach außen bewegt wird. Durch die Bewegung des Massestückes wir ein drahtförmiger, freier Endabschnitt eines Spannstranges eingeklemmt. Bei dem der vorliegenden Erfindung zugrunde liegenden Spannschloss ist jedoch kein freies Ende des Spannstranges vorgesehen, auf welches ein Klemmelement wirken könnte. Vielmehr ist der Spannstrang und folglich dessen Endbereich auf eine Wickelrolle des Spannschlosses aufgerollt. Die bekannten Ausführungsformen sind zur vorübergehenden Fixierung eines Spannstranges eines Spannschlosses der eingangs genannten Art bauartbedingt nicht gut geeignet, da bei einem gattungsgemäßen Spannschloss eine direkte Klemmung des Spannstranges durch ein bewegliches Massestück zu einem komplizierten Aufbau des Spannsschlosses führen würde.

In der US 2,593,018 ist ein Kettenschloss offenbart, bei dem ein Ende eines Kettenstranges in einem Ringglied endet, das durch Federkraft in das Kettenschloss gezogen wird. Das Ringglied weist außerdem eine Schulter auf, die in eingezogenem Zustand des Ringglieds auf einer Kante des Kettenschloss-Gehäuses ruht und dort gehalten wird, vorausgesetzt, das Kettenschloss befindet sich in einer geeigneten Orientierungsposition. Zum Freigeben des Ringglieds ist ein Auslösestift vorgesehen.

Eine Aufgabe der Erfindung liegt daher darin, ein Spannschlosses der eingangs genannten Art zu schaffen, welches zum Lösen nicht manuell betätigt werden muss, und das einen dem rauen Betrieb entsprechenden robusten und einfachen Aufbau besitzt.

Diese Aufgabe wird mit einem Spannschloss der eingangs genannten Art erfindungsgemäß dadurch gelöst, dass die Sperrklinke aus einer bei Stillstand des Rades vorliegenden Ruhestellung, in welcher sie nicht in Eingriff mit dem Klinkenrad steht und der Spannstrang nicht blockiert ist, unter Einwirkung der Fliehkraft bei Rotation des Rades zumindest abschnittsweise nach außen bewegt wird und diese Bewegung ein Eingreifen der Sperrklinke in das Klinkenrad bewirkt.

Gemäß der erfindungsgemäßen Lösung stellt die Sperrklinke ein Fliehkraftpendel dar, welches unter Einfluss der Fliehkraft ab einer gewissen Umdrehungszahl des Fahrzeugrades mit dem Klinkenrad in Eingriff gebracht wird und bei Stillstand des Rades bzw. bei einer Verringerung der Umdrehungszahl des Rades in seine ursprüngliche Position zurückkehrt. Somit erfolgt ab einer gewissen Drehzahl des Rades bzw. Geschwindigkeit des Fahrzeuges ein Eingreifen der Sperrklinke in das Klinkenrad und dadurch eine Fixierung des Spannstranges entgegen seiner Aufwickelrichtung, wodurch ein ungewolltes Abwickeln des Spannstranges von der Wickelrolle verhindert werden kann und ein sicherer Halt der Gleitschutzkette an dem Reifen gewährleistet wird, ohne dass es hierdurch zu einer Beeinträchtigung bei der Montage der Kette kommt.

Eine Variante der Erfindung, die sich durch einen einfachen und somit kostengünstig herzustellenden Aufbau auszeichnet, sieht vor, dass die Sperrklinke exzentrisch um eine Achse drehbar gelagert ist, wobei ein nicht mit dem Klinkenrad zusammenwirkender freier Endabschnitt länger und massereicher als ein zweiter mit dem Klinkenrad zusammenwirkender Endabschnitt der Sperrklinke ausgebildet ist. Bei dieser Variante der Erfindung weist das Klinkenrad günstiger Weise an einer äußeren Umfangsfläche eine Verzahnung auf, wodurch sich eine weitere Vereinfachung des Aufbaus erzielen lässt.

Eine sehr kompakte Bauweise lässt sich dadurch erzielen, dass das Klinkenrad an einer inneren Umfangsfläche eine Verzahnung aufweist, mit welcher die Sperrklinke durch eine von der Fliehkraft bewirkte Verschiebung und/oder Verdrehung in Eingriff bringbar ist, wobei die Sperrklinke von dem Klinkenrad umgeben ist.

Ein flacher Aufbau des Spannschlosses wird dadurch erreicht, dass die Sperrklinke plattenförmig ausgebildet ist und zumindest einen mit dem Klinkenrad in Eingriff bringbaren Fortsatz aufweist.

Gemäß einer vorteilhaften Variante der Erfindung ist die Sperrklinke mit zumindest einer der Fliehkraft entgegen wirkenden Feder belastet. Durch Einstellung der Federkraft lassen sich ein definiertes Eingreifen der Sperrklinke sowie ein gesichertes Zurückführen der Sperrklinke in die Ausgangsposition gewährleisten. Durch das Zurückführen in die Ausgangsposition durch die Federkraft wird sichergestellt, dass es zu keinem ungewollten Blockieren des Spannstranges bei der Montage bzw. Demontage der Gleitschutzkette kommt.

Eine andere Variante der Erfindung zur Erzielung einer einfachen und kompakten Ausführungsform sieht vor, dass die Sperrklinke in radialer Richtung verschiebbar an einem Führungszapfen des Gehäuses gelagert ist, wobei die Sperrklinke eine Aufnahme für den Führungszapfen aufweist, wobei der an die Aufnahme anschließende, den mit dem Klinkenrad in Eingriff bringbaren Fortsatz aufweisende Endbereich der Sperrklinke den größten Teil der Masse der Sperrklinke aufweist.

Eine Ausführungsform, welche durch einen einfachen Aufbau und eine einfache Montierbarkeit der Feder auszeichnet sieht vor, dass eine Schraubenfeder vorgesehen ist, die zwischen dem Führungszapfen und einem den mit dem Klinkenrad in Eingriff bringbaren Fortsatz aufweisenden Endbereich gegenüberliegenden Endbereich der Ausnehmung angeordnet ist.

Um eine sehr gute Führung und Definition des Bewegungsablaufes der Sperrklinke und dadurch eine sehr gute Funktionalität zu gewährleisten, kann die Sperrklinke im Bereich ihres mit dem Klinkenrad zusammenwirkenden Endbereiches um eine Achse drehbar gelagert sein. Die Sperrklinke kann hierbei eine Ausnehmung zur Aufnahme des oben erwähnten Führungszapfens des Gehäuses aufweisen. Ein an die Ausnehmung anschließender, freier, dem mit dem Klinkenrad zusammenwirkenden Endbereich gegenüberliegender Endabschnitt der Sperrklinke kann hierbei den größten Teil der Masse der Sperrklinke aufweisen.

Ein vereinfachter Zusammenbau und eine kompakte Bauweise des Spannschlosses lassen sich dadurch erzielen dass die Wickelrolle und das Klinkenrad einstückig miteinander ausgebildet sind. Wickelrolle und Klinkenrad können jedoch auch gesonderte Komponenten sein, die bei der Fertigung des Spannschlosses verbunden werden.

Darüber hinaus kann, beispielsweise in Weiterbildung der Variante mit einer Verzahnung an einer inneren Umfangsfläche des Klinkenrads, die Sperrklinke entlang einer in dem Gehäuse gehaltenen Führung beweglich gelagert sein. Hierbei kann die Führung eine Bewegung der Sperrklinke gemäß einer gekrümmten Bahn zulassen, an deren einem Ende die Sperrklinke mit an ihr vorgesehenen Vorsprüngen in das Klinkenrad eingreift.

Die Erfindung samt weiteren Vorteilen wird im Folgenden anhand einiger nicht einschränkender Ausführungsbeispiele näher erläutert, welche in den Zeichnungen dargestellt sind, in diesen zeigen schematisch:
- Fig. 1: eine Gleitschutzkette mit einem Spannschloss für deren einen Seitenstrang, montiert auf einem Fahrzeugreifen, in Seitenansicht;
- Fig. 2: eine erste Version eines erfindungsgemäßen Spannschlosses mit einem abge- nommenen Gehäusedeckel, wobei sich die Sperrklinke in einer Blockierungs- position befindet;
- Fig. 2a: das Spannschloss aus Fig. 1, wobei sich die Sperrklinke in einer Freigabeposition befindet;
- Fig. 3: eine zweite Variante eines erfindungsgemäßen Spannschlosses mit abgenom- menem Gehäusedeckel, wobei sich die Sperrklinke in einer Blockierungsposition befindet;
- Fig. 4: eine dritte Variante eines erfindungsgemäßen Spannschlosses mit abgenom- menem Gehäusedeckel, wobei sich die Sperrklinke in einer Freigabeposition be- findet;
- Fig. 5: eine Explosionsdarstellung einer vierten Variante eines erfindungsgemäßen Spannschlosses;
- Fig. 5a: eine Rückansicht auf das Spannschloss aus Fig. 5 mit abgenommenem Gehäuse- grundteil und
- Fig. 5b: eine Draufsicht auf das Spannschloss aus Fig. 5 mit abgenommenem Gehäuse- deckel.
- Fig. 6: eine Explosionsdarstellung eines Spannschloss gemäß einer weiteren Ausfüh- rungsvariante der Erfindung;
- Fig. 6a: das Spannschloss der Fig. 6 in Seitenansicht;
- Fig. 6b: eine Schnittansicht des Spannschlosses der Fig. 6, wobei sich die Sperrklinke in einer Blockierungsposition befindet; und
- Fig. 6c: eine Schnittansicht des Spannschlosses der Fig. 6, wobei sich die Sperrklinke in einer Freigabeposition befindet.

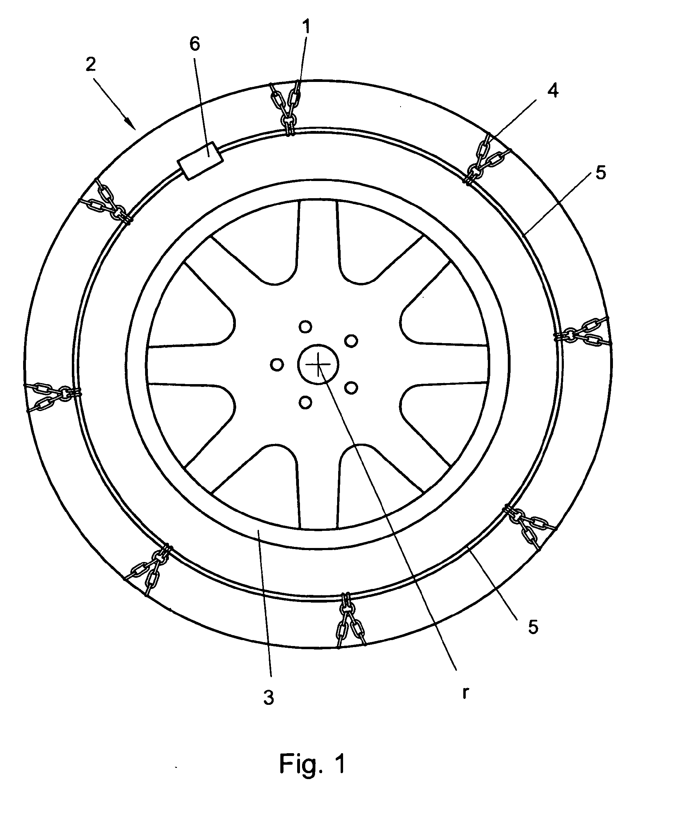

In Fig. 1 ist eine Gleitschutzkette 1 in Seitenansicht gezeigt, die auf einem Reifen 2 eines Fahrzeugrades 3 mit der Radachse r aufgezogen ist. Das Kettennetz 4 der Gleitschutzkette 1 ist an der Innen- und der Außenseite des Reifens bzw. Rades in bekannter Weise durch Seitenstränge 5 zusammen gehalten bzw. gespannt. Ein Spannschloss 6 hält während einer Drehbewegung des Rades den Spannstrang entgegen der Spannrichtung blockiert.

Hierzu sei angemerkt, dass die Seitenstränge 5 an der Innenseite des Reifens elastisch ausgebildet sein und durch ein Spannschloss 6 nach der Erfindung zusammengehalten werden können, wobei an der Außenseite eine andere Konstruktion verwendet werden kann. Andererseits kann die gesamte Spanneinrichtung einschließlich des Spannschlosses innen und außen auch gleich ausgebildet sein. Jedenfalls ist die Erfindung in ihrer Anwendung nicht auf eine der beiden Reifenseiten beschränkt.

Der Seitenstrang 5 kann eine Zugfeder - beispielsweise eine Spiralfeder - aufweisen. Im Inneren der Spiralfeder kann ein Spannstrang, im Folgenden mit dem Bezugszeichen 7 bezeichnet, verlaufen. Die Zugspannung der Zugfeder, die den Mantel darstellt, ist so groß, dass die Gleitschutzkette 1, beispielsweise eine Schneekette, nach dem Anlegen der Kette gespannt ist.

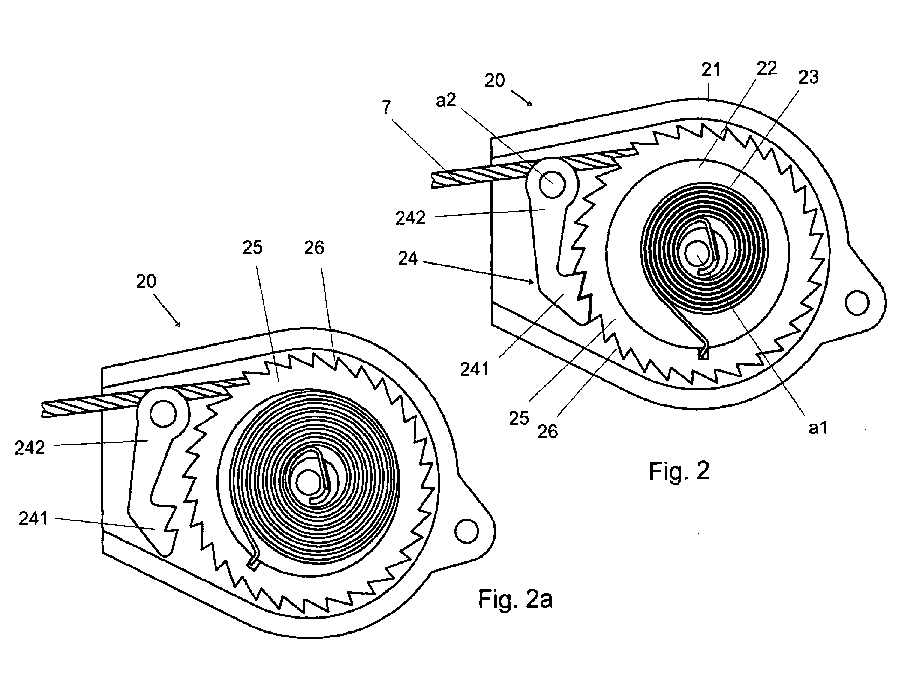

Die Figuren 2 bis 6 zeigen erfindungsgemäße Ausführungsformen 20, 30, 40, 50, 60 des Spannschlosses 6. Selbstverständlich ist die Erfindung nicht auf die gezeigten Ausführungsformen beschränkt, vielmehr sind Kombinationen der Ausführungsformen sowie Abwandlungen dieser möglich, soweit diese in den Bereich der Ansprüche fallen.

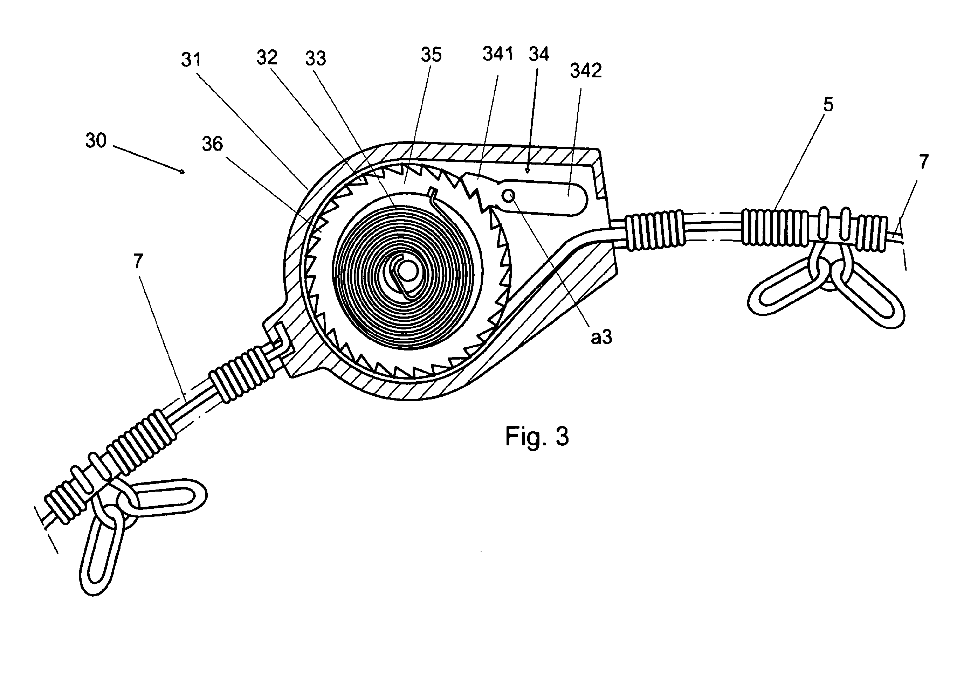

Gemäß Fig. 2 weist das Spannschloss 20 einer ersten Ausführungsform ein Gehäuse 21 auf. Der Spannstrang 7 kann durch eine Gehäuseöffnung in das Gehäuse 21 hinein bzw. aus dem Gehäuse 21 heraus gezogen werden. Innerhalb des Gehäuses 21 ist der Spannstrang 7 an eine in Aufwickelrichtung vorgespannte, um ihre Achse a1 drehbar gelagerte Wickelrolle 22 angeschlossen, auf welche der Spannstrang 7 aufgewickelt werden kann. Die Wickelrolle 22 kann beispielsweise mit einer Spiralfeder 23 in Aufwickelrichtung vorgespannt sein, deren Enden an der Wickelrolle 22 und dem Gehäuse 21 des Spannschlosses 20 fixiert sind. Das andere Ende des Spannstranges 7 kann, wie aus Fig. 3 ersichtlich, außen an dem Gehäuse 21 des Spannschlosses 20 befestigt sein.

An der Wickelrolle 22 ist ein Klinkenkrad 25 mit zumindest einer ihm zugeordneten Sperrklinke 24 vorgesehen. Das Klinkenrad 25 weist an einer äußeren Umfangsfläche eine Verzahnung 26 auf. Durch Eingreifen der Sperrklinke 24 in das Klinkenrad 25 ist der Spannstrang 7 entgegen seiner Spannrichtung blockierbar. Für alle gezeigten Ausführungsformen der Erfindung gilt, dass die Sperrklinke und die Verzahnung des Klinkenrades kongruent zueinander ausgebildet sein können. Günstiger Weise können die Wickelrolle 22 und das Klinkenrad 25 bei allen Varianten der Erfindung einstückig miteinander ausgebildet sein.

Fig. 2a zeigt die Sperrklinke 24 bei Stillstand des Rades 3. Hierbei befindet sich die Sperrklinke 24 in einer Ruhestellung, in welcher sie nicht in Eingriff mit dem Klinkenrad 25 steht, der Spannstrang 7 nicht blockiert ist und unter Einwirkung einer Kraft entgegen seiner Aufwickelrichtung aus dem Gehäuse gezogen und die Gleitschutzkette 1 auf den Reifen 2 montiert bzw. demontiert werden kann. Das Spannschloss 20 dient dazu, den Spannstrang 7 auch beim Einwirken erheblicher Kräfte im Betrieb zu Fixieren und somit einen guten Halt der Gleitschutzkette 1 zu gewährleisten.

Für alle dargestellten Ausführungsformen der Erfindung gilt, dass unter Einwirkung der durch eine Rotation des Rades 3 hervorgerufenen Fliehkraft die Sperrklinke 24 aus einer bei Stillstand des Rades 3 vorliegenden Ruhestellung, in welcher sie nicht in Eingriff mit dem Klinkenrad 25 steht und der Spannstrang, 7 nicht blockiert ist, zumindest abschnittsweise nach außen bewegt wird. Durch diese von der Fliehkraft hervorgerufene Bewegung wird ein Eingreifen der Sperrklinke 24 in das Klinkenrad 25 bewirkt.

Wie aus den Darstellungen der Fig. 2 und 2a ersichtlich, kann die Sperrklinke 24 exzentrisch um eine Achse a2 gelagert sein. Gemäß den Fig. 2 und 2a kann die Lagerung der Sperrklinke mit ihrem Endbereich 242, der dem mit dem Klinkenrad 25 zusammenwirkenden Ende 241 gegenüberliegt, erfolgen.

Wie in Fig. 3 dargestellt, kann bei einer anderen Ausführungsform 30 eines erfindungsgemäßen Spannschlosses ein nicht mit dem Klinkenrad 35 zusammenwirkender freier Endabschnitt 342 der Sperrklinke 34 länger und massereicher als ein zweiter mit dem Klinkenrad 35 zusammenwirkender Endabschnitt 341 der Sperrklinke 34 ausgebildet sein. Durch die Fliehkraft kann der massereichere Teil 342 nach außen bewegt werden, wodurch es zu einer Drehung der Sperrklinke 34 in dem Gehäuse 31 um die Achse a3 kommt. Durch diese Drehung wird der Abschnitt 341 mit der Verzahnung 36 an der äußeren Umfangsfläche des Klinkenrades 35 in Eingriff gebracht. Bei Verringerung bzw. Wegfall der Fliehkraft sinkt das massereichere Stück in seine Ruhelage zurück, wodurch sich der Abschnitt 341 der Sperrklinke 34 von der Verzahnung 36 löst. Die übrigen Komponenten, insbesondere Wickelrolle 32 und Spiralfeder 33, entsprechen denen der Ausführungsform der Fig. 2 und 2a.

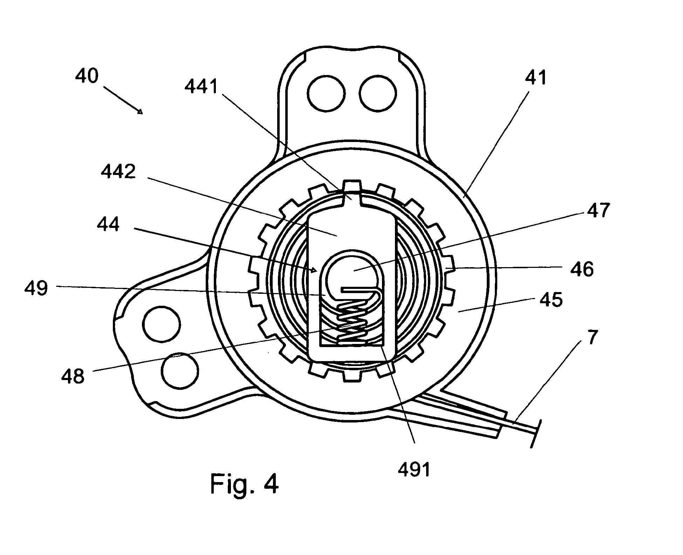

Gemäß der in Fig. 4 gezeigten Variante eines erfindungsgemäßen Spannschlosses 40 kann die Sperrklinke 44 radial verschiebbar in dem Gehäuse 41 gelagert sein. Das Klinkenrad 45 weist hierbei an einer inneren Umfangsfläche eine Verzahnung 46 auf, mit welcher die Sperrklinke durch eine von der Fliehkraft bewirkte Verschiebung und/oder Verdrehung der Sperrklinke in Eingriff gebracht werden kann. Das Klinkenrad 45 ist hierbei einstückig mit der Wickelrolle ausgebildet, wobei die Verzahnung an einer kreisrunden Ausnehmung der Wickelrolle angeordnet ist. Anders ausgedrückt, kann eine innere Umfangsfläche des Klinkenrades 45 die Verzahnung 46 aufweisen, während eine äußere Umfangsfläche zum Aufwickeln des Spannstranges 7 vorgesehen ist.

Die Sperrklinke 44 ist von dem Klinkenrad 45 bzw. der Verzahnung 46 seitlich umgeben. D.h. das Klinkenrad 45 bzw. die Verzahnung 46 ist in einer gemeinsamen Schnittebene betrachtet um die Sperrklinke 44 herum angeordnet, sodass bei einer beliebigen Drehung des Klinkenrades 45 die Sperrklinke 44 mit der Verzahnung 46 in Eingriff gebracht werden kann.

Die dargestellte Sperrklinke 44 ist plattenförmig ausgebildet und weist zumindest einen mit dem Klinkenrad 45 bzw. der Verzahnung 46 in Eingriff bringbaren Fortsatz 441 auf. Der Fortsatz 441 und die Verzahnung 46 sind kongruent zueinander ausgebildet. In der hier dargestellten Ausführungsform der Erfindung ist der Fortsatz 441 trapezförmig ausgebildet, wobei die Verzahnung 46 entsprechende trapezförmige Ausnehmungen aufweist.

Weiters ist die Sperrklinke 44 mit einer der Fliehkraft entgegen wirkenden Feder 48 belastet. Die Sperrklinke 44 ist in radialer Richtung verschiebbar an einem Zapfen 47 des Gehäuses gelagert, wobei die Sperrklinke 44 eine Ausnehmung 49 als Aufnahme für den Führungszapfen 47 aufweist. Der Endbereich 442 der Sperrklinke wird bei einer Rotation des Rades 3 durch die Fliehkraft in Richtung der Verzahnung 46 des Klinkenrades 45 bewegt. Zwischen dem Führungszapfen 47 und dem Endbereich 491 der Ausnehmung 49 ist die oben erwähnte Feder 48, welche als Schraubenfeder ausgeführt sein kann, angeordnet.

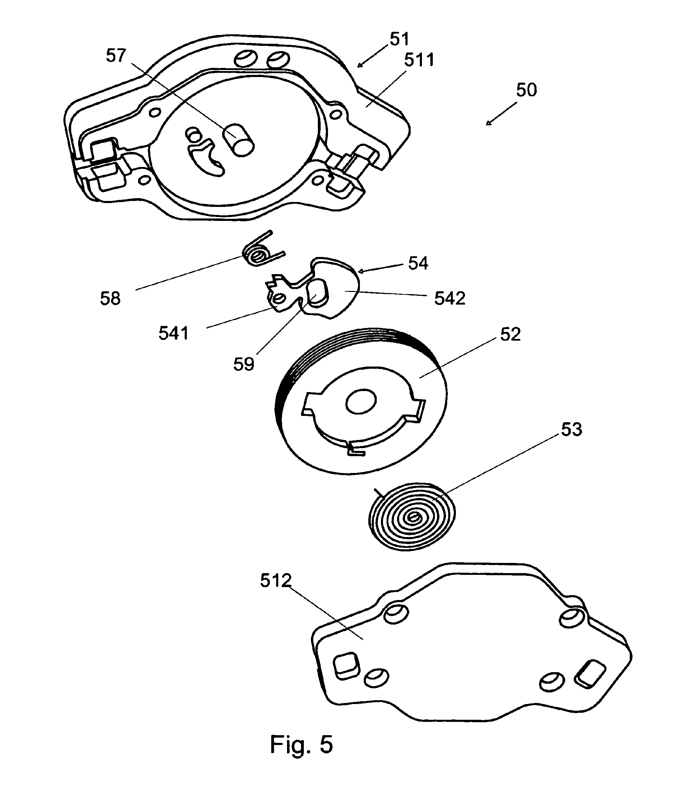

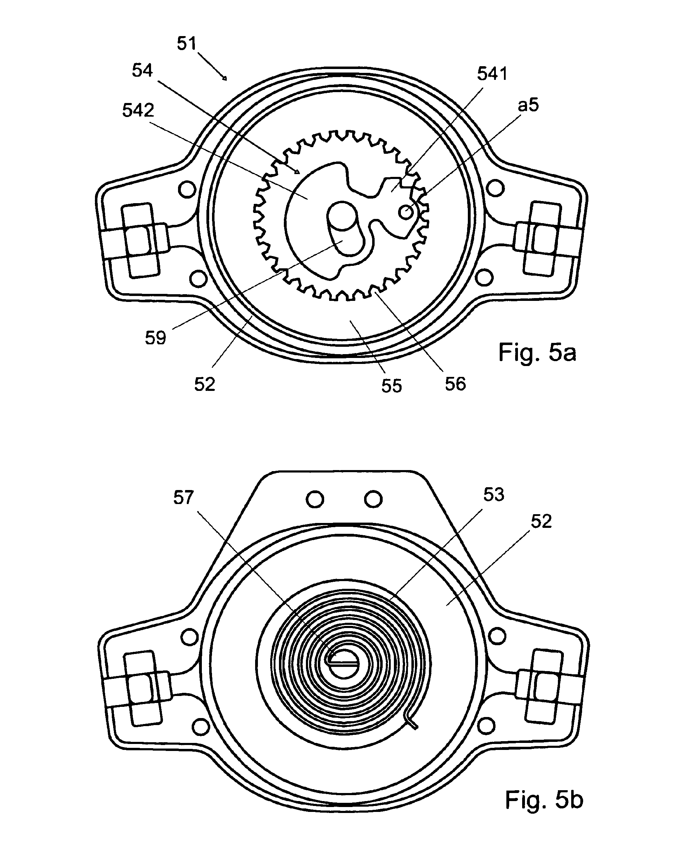

Nunmehr Bezug nehmend auf die in den Figuren 5, 5a und 5b dargestellte Variante der Erfindung kann die plattenförmige Sperrklinke 54 des Spannschlosses 50 im Bereich ihres mit dem Klinkenrad 55 zusammenwirkenden Endbereiches 541 um eine Achse a5 drehbar gelagert sein. Das Klinkenrad 55 und die Wickelrolle 52 können bei dieser Variante der Erfindung gleichartig wie in der oben beschriebenen und in Fig. 4 dargestellten Variante ausgebildet sein. Das Gehäuse 51 besteht hier aus zwei Teilen, einem Gehäusegrundteil 511 und einem Gehäusedeckel 512.

Bei dem in den Fig. 5 - 5b dargestellten Spannschloss 50 weist die Sperrklinke 54 eine Ausnehmung 59 zur Aufnahme des Zapfens 57 des Gehäuses 51 auf. Fig. 5a zeigt hierbei das Spannschloss 50, bei welchem das Gehäusegrundteil 511 entfernt ist (Aufsicht auf die Innenseite des Gehäusedeckels 512), während Fig. 5b eine Draufsicht auf das Spannschloss bei abgenommenen Gehäusedeckel 512 zeigt. Der Zapfen 57 kann, wie auch bei allen anderen oben genannten Ausführungsformen einen Schlitz zur Aufnahme eines Endbereichs der Spiralfeder 53 aufweisen und somit als Befestigungselement der Spiralfeder 53 in dem Gehäuse 51 dienen. Die Ausnehmung 59 ist der Drehbewegung der Sperrklinke 54 um die Achse a5 angepasst, sodass eine ungehinderte Ausdrehung der Sperrklinke 54 unter Einfluss der Fliehkraft erfolgen kann. Ein an die Ausnehmung 59 anschließender, freier Endbereich 542 bzw. Teil der Sperrklinke 54 weist die größte der Masse der Sperrklinke 54 auf. Unter Einfluss der Fliehkraft kann der Teil 542 nach außen bewegt werden, wodurch es zu er Verdrehung um die Achse a5 und zu einem Eingreifen des Fortsatzes 541 in die Verzahnung 56 des Klinkenrades kommt. Auch bei dieser Variante der Erfindung ist die Sperrklinke 54 Federbelastet, wobei hier bevorzugter Weise eine sich an dem Gehäuse der Spannvorrichtung und an der Sperrklinke abstützende bzw. befestigte Feder 58 zum Einsatz kommt.

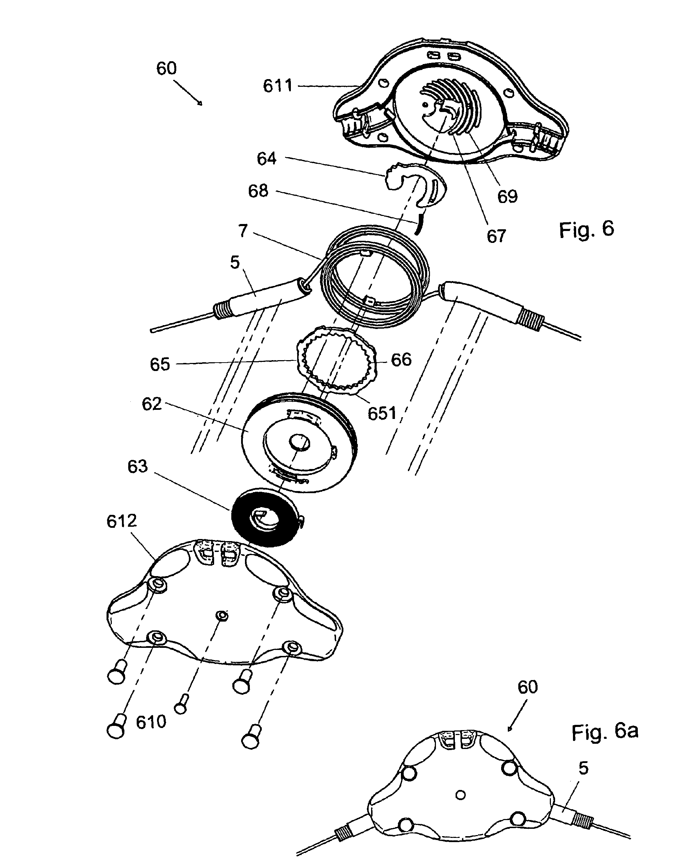

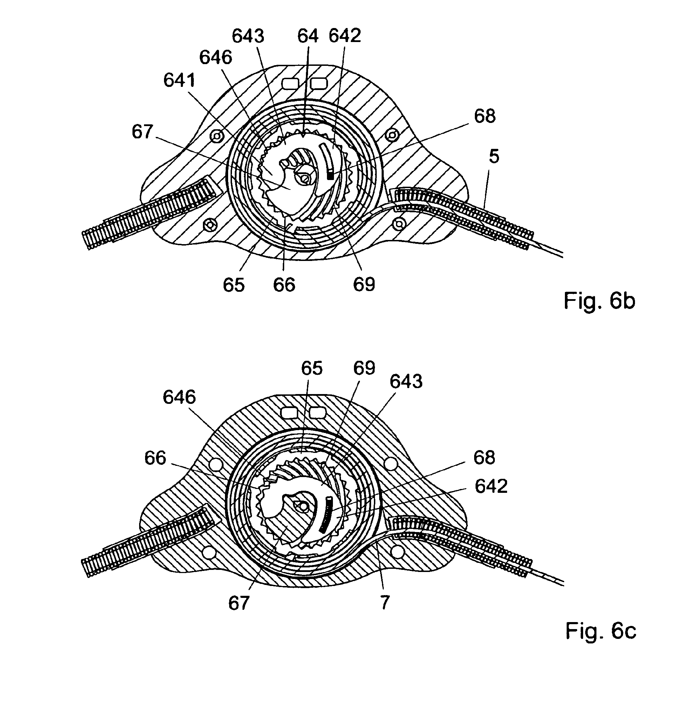

In den Figuren 6, 6a - 6c ist eine weitere Variante der Erfindung dargestellt, in der das Spannschloss 60 eine Sperrklinke 64 aufweist, deren Bewegung von einer Führung anstelle einer Achslagerung bestimmt ist.

In dieser Ausführungsform besteht wiederum das Gehäuse aus zwei Teilen, nämlich Gehäusegrundteil 611 und Gehäusedeckel 612, die z.B. durch Niete 610 verbunden werden. Das Spannschloss 60 liegt im montierten Zustand der Kette 1 vorzugsweise mit dem Rücken des Grundteils 611 dem Reifen an. Zudem sind, wie aus Fig. 6 ersichtlich, beide Enden des Spannstranges 7 auf der Wickelrolle 62 aufgewickelt. Das Aufwickeln beider Strangenden ergibt den Vorteil einer symmetrischen Verkürzung des Spannstranges. Die Wickelrolle 62 ist wie bei den anderen Ausführungsformen mithilfe einer Spiralfeder 63 vorgespannt. Das Klinkenrad 65 ist in der Ausführungsform der Fig. 6 ein von der Wickelrolle 62 gesondertes Bauteil, das über Noppen 651 an der Außenseite des Klinkenrads mit der Wickelrolle 62 in Kontakt steht und mit einer Innenverzahnung 66 ausgestattet ist. Die asymmetrische Gestaltung der Noppen 651 hat fertigungstechnische Vorteile und erbringt zudem einen verbesserten Zusammenhalt zwischen Klinkenrad und Wickelrolle.

Die Sperrklinke 64 ist in dieser Variante nicht in einem Achszapfen gelagert; vielmehr wird die Bewegung der Sperrklinke durch eine Führung definiert. Hierzu ist in dem Gehäuse ein Führungsstück 67 vorgesehen, das gegenüber dem Gehäuse unbeweglich ist, vorzugsweise mit dem Gehäusegrundteil 611 einstückig und im Inneren desselben auf dem Gehäuseboden angeordnet ist. Die Sperrklinke 64 weist eine Form auf, die eine das Führungsstück umgebende Ausnehmung bildet, wobei die Sperrklinke an den Flanken des Führungsstücks entlang gleiten und sich quer zu dieser Bewegung an dem Führungsstück 67 abstützen kann. Wie aus den Fig. 6b und 6c ersichtlich ist, weist die Sperrklinke 64 insbesondere zwei gegenüber liegende Endbereiche 641, 642 auf, zwischen denen das Führungsstück gelegen ist, und die durch einen um das Führungsstück herumgeführten Mittelbereich 643 zusammenhängen. Die beiden Endbereiche 641, 642 liegen mit jeweils einer Flanke dem Führungsstück 67 an. Die Flanken können wie gezeigt gebogen sein, typischerweise in Form konzentrischer Rotationsflächen, z.B. Zylindermantelbereiche, sodass sie eine gekrümmte Bahn der Sperrklinke 64 definieren.

Die beiden Endbereiche 641, 642 der Sperrklinke 64 sind wiederum verschieden groß ausgebildet, und der äußere Endbereich 642 weist den überwiegenden (d.h. größten) Teil der Masse der Sperrklinke auf. Insgesamt ist die Sperrklinke 64 so geformt, dass sie gegenüber dem Führungsstück 67 weiter außen liegt. (Hierbei ist der Begriff "außen" in Bezug auf die Achse r eines Rades zu verstehen, auf dem die Kette 1 samt Spannschloss montiert ist.) Bei einer Drehbewegung des Rades wird daher die Sperrklinke 64 unter Einfluss der Fliehkraft nach außen, d.h. in Fig. 6b nach oben, bewegt. Hierbei kommt die Sperrklinke 64 über an dem Mittelbereich 643 ausgebildeten Fortsätzen 646 mit der Verzahnung 66 in Eingriff und bewirkt so ein Blockieren des Klinkenrads 65 und der damit zusammenwirkenden Wickelrolle 63. Infolge der bereits erwähnten krummlinigen Führung wird hierbei der mit den Fortsätzen 646 der Sperrklinke 64 zusammenwirkende Teil der Verzahnung 66 deutlich weniger auf Abscherung belastet. Die bei dem Blockieren des Klinkenrads 65 auftretenden Kräfte werden von dem als Abstützung dienenden Führungsstück 67 aufgenommen.

Um ein zuverlässiges Rückstellen der Sperrklinke 64 in die in Fig. 6c gezeigte Freigabeposition zu erreichen, wenn das Rad zum Stillstand kommt, kann in dem äußeren Endbereich 642 eine Rückstellfeder 68 vorgesehen sein, die der bei der Raddrehung auftretenden Fliehkraft entgegenwirkt. Die Rückstellfeder 68 ist beispielsweise eine Schraubenfeder, die in einem in dem Endbereich 642 vorgesehenen, mit den gekrümmten Flanken konzentrischen Kanal untergebracht ist.

Wie ferner aus Fig. 6 ersichtlich, ist die Sperrklinke plattenförmig ausgebildet und liegt mit ihren Flachseiten einerseits der der Wickelrolle 62, andererseits auf der Innenseite des Gehäusegrundteils, nämlich dem Gehäuseboden, auf. Zur Verbesserung der Beweglichkeit der Sperrklinke 64 kann der Gehäuseboden mit Rippen 69 ausgestaltet sein, die die effektive Auflagefläche verringern und so ein Gleiten der Sperrklinke 64 bei ihrer Bewegung entlang des Führungsstücks 67 fördern. Falls gewünscht, können die Rippen 69 so geformt sein, dass sie zusätzlich zum Führen der Bewegung der Sperrklinke 64 beitragen.

Selbstverständlich ist die gezeigte Erfindung nicht auf die gezeigten Ausführungsbeispiele beschränkt, sondern erfasst alle Ausführungsformen, die unter den unabhängigen Anspruch fallen. Insbesondere können auch die gezeigten Ausführungsbeispiele, wo immer zweckmäßig, miteinander kombiniert werden. Insbesondere kann eine Sperrklinke wie in Fig. 6 gezeigt auch mithilfe eines aus ihr ausgeprägten Bolzens als Achse geführt werden, oder umgekehrt die anderen Ausführungsform mithilfe einer Führung anstelle einer Achse.

## Patentansprüche

1. Spannschloss (20, 30, 40, 50, 60) für ein auf ein Rad (3) eines Fahrzeuges montierbare Gleitschutzkette (1) mit einem Gehäuse (21, 31, 41, 51) und einem durch eine Gehäuseöffnung in das Gehäuse hineinziehbaren Spannstrang (7), wobei der Spannstrang, (7) innerhalb des Gehäuses (21, 31, 41, 51) an eine in Aufwickelrichtung vorgespannte, um ihre Achse (a1) drehbar gelagerte Wickelrolle (22, 32, 52, 62) angeschlossen ist, wobei an der Wickelrolle (22, 32, 52, 62) ein Klinkenrad (25, 35, 45, 55, 65) mit zumindest einer ihm zugeordneten Sperrklinke (24, 34, 44, 54, 64) vorgesehen ist und der Spannstrang (7) durch Eingreifen der Sperrklinke (24, 34, 44, 54, 64) in das Klinkenrad (25, 35, 45, 55, 65) entgegen seiner Spannrichtung blockierbar ist, **dadurch gekennzeichnet, dass** die Sperrklinke (24, 34, 44, 54, 64) aus einer bei Stillstand des Rades (3) vorliegenden Ruhestellung, in welcher sie nicht in Eingriff mit dem Klinkenrad (25, 35, 45, 55, 65) steht und der Spannstrang (7) nicht blockiert ist, unter Einwirkung der Fliehkraft bei Rotation des Rades (7) zumindest abschnittsweise nach außen bewegt wird und diese Bewegung ein Eingreifen der Sperrklinke (24, 34, 44, 54, 64) in das Klinkenrad (25, 35, 45, 55, 65) bewirkt.

2. Spannschloss nach Anspruch 1, **dadurch gekennzeichnet, dass** die Sperrklinke (24, 34, 44, 54) exzentrisch um eine Achse (a2, a3, a5) drehbar gelagert ist.

3. Spannschloss nach Anspruch 2, **dadurch gekennzeichnet, dass** ein nicht mit dem Klinkenrad (35) zusammenwirkender freier Endabschnitt (342) länger und massereicher als ein zweiter mit dem Klinkenrad (35) zusammenwirkender Endabschnitt (341) der Sperrklinke (34) ausgebildet ist.

4. Spannschloss nach Anspruch 3, **dadurch gekennzeichnet, dass** das Klinkenrad (25, 35) an einer äußeren Umfangsfläche eine Verzahnung (26, 36) aufweist.

5. Spannschloss nach Anspruch 1, **dadurch gekennzeichnet, dass** die Sperrklinke (44, 54, 64) plattenförmig ausgebildet ist und zumindest einen mit dem Klinkenrad (45, 55, 65) in Eingriff bringbaren Fortsatz (441, 541, 641) aufweist.

6. Spannschloss nach einem der Ansprüche 1 bis 3 oder 5, **dadurch gekennzeichnet, dass** das Klinkenrad (45, 55, 65) an einer inneren Umfangsfläche eine Verzahnung (46, 56) aufweist, mit welcher die Sperrklinke (44, 54, 64) durch eine von der Fliehkraft bewirkte Verschiebung und/oder Verdrehung der Sperrklinke (44, 54, 64) in Eingriff bringbar ist, wobei die Sperrklinke (44, 54, 64) von dem Klinkenrad (45, 55, 65) umgeben ist.

7. Spannschloss nach Anspruch 5 oder 6, **dadurch gekennzeichnet, dass** die Sperrklinke (44, 54, 64) mit zumindest einer der Fliehkraft entgegen wirkenden Feder (48, 58, 68) belastet ist.

8. Spannschoss nach Anspruch 5 oder 6, **dadurch gekennzeichnet, dass** die Sperrklinke (44) in radialer Richtung verschiebbar an einem Führungszapfen (47) des Gehäuses (41) gelagert ist, wobei die Sperrklinke (44) eine Aufnahme (49) für den Führungszapfen (47) aufweist.

9. Spannschloss nach Anspruch 8, **dadurch gekennzeichnet, dass** eine Schraubenfeder (48) vorgesehen ist, die zwischen dem Führungszapfen (47) und einem den mit dem Klinkenrad (45) in Eingriff bringbaren Fortsatz (441) aufweisenden Endbereich (442) gegenüberliegenden Endbereich (491) der Ausnehmung (49) angeordnet ist.

10. Spannschloss nach einem der Ansprüche 5 bis 7, **dadurch gekennzeichnet, dass** die Sperrklinke (54) im Bereich ihres mit dem Klinkenrad (55) zusammenwirkenden Endbereiches (541) um eine Achse (a5) drehbar gelagert ist, wobei die Sperrklinke (54) eine Ausnehmung (59) zur Aufnahme des Führungszapfens (57) des Gehäuses aufweist und ein an die Ausnehmung (59) anschließender, freier, dem mit dem Klinkenrad zusammenwirkenden Endbereich (541) gegenüberliegender Endabschnitt (542) der Sperrklinke (54) den überwiegenden Teil der Masse der Sperrklinke (54) aufweist.

11. Spannschloss nach einem der Ansprüche 1 bis 10, **dadurch gekennzeichnet, dass** die Wickelrolle (22, 32, 52) und das Klinkenrad (25, 35, 55) einstückig miteinander ausgebildet sind.

12. Spannschloß nach einem der Ansprüche 5 bis 7, 10 und 11, **dadurch gekennzeichnet, dass** die Sperrklinke (64) entlang einer in dem Gehäuse gehaltenen Führung (67) beweglich gelagert ist.

13. Spannschloss nach Anspruch 12, **dadurch gekennzeichnet, dass** die Führung eine Bewegung der Sperrklinke (64) gemäß einer gekrümmten Bahn zulässt, an deren einem Ende die Sperrklinke (64) mittels zumindest einem Fortsatz (646) in das Klinkenrad (65) eingreift.

## Claims

1. Turnbuckle (20, 30, 40, 50, 60) for an anti-skid chain (1) that can be mounted on a wheel (3) of a vehicle, with a housing (21, 31, 41, 51) and a tension cable (7) that can be pulled through a housing opening into the housing, wherein the tension cable (7) is connected inside the housing (21, 31, 41, 51) to a winding roll (22, 32, 52, 62) that is pre-stressed in the winding-up direction and mounted so it can be rotated about its axle (a1), wherein a ratchet wheel (25, 35, 45, 55, 65) with at least one ratchet catch (24, 34, 44, 54, 64) allocated to it is provided on the winding roll (22, 32, 52, 62) and the tension cable (7) can be blocked against its direction of tension by the ratchet catch (24, 34, 44, 54, 64) engaging with the ratchet wheel (25, 35, 45, 55, 65), **characterised in that** the ratchet catch (24, 34, 44, 54, 64) is moved from an idle position it is in when the wheel (3) is stationary, in which it is not in engagement with the ratchet wheel (25, 35, 45, 55, 65) and the tension cable (7) is not blocked outwards at least in a section hereof under the action of the centrifugal force upon rotation of the wheel (7), and this movement effects an engagement of the ratchet catch (24, 34, 44, 54, 64) with the ratchet wheel (25, 35, 45, 55, 65).

2. Turnbuckle according to claim 1, **characterised in that** the ratchet catch (24, 34, 44, 54) is mounted so it can be turned about an axle (a2, a3, a5).

3. Turnbuckle according to claim 2, **characterised in that** a free end section (342) not acting together with the ratchet wheel (35) is constructed longer and more massive that a second end section (341) of the ratchet catch (34) acting together with the ratchet wheel (35).

4. Turnbuckle according to claim 3, **characterised in that** the ratchet wheel (25, 35) has a gearing (26, 36) on an outer circumferential surface.

5. Turnbuckle according to claim 1, **characterised in that** the ratchet catch (44, 54, 64) is constructed plate-shaped and has at least one extension (441, 541, 641) that can be brought into engagement with the ratchet wheel (45, 55, 65).

6. Turnbuckle according to one of the claims 1 to 3 or 5, **characterised in that** the ratchet wheel (45, 55, 65) has a gearing (46, 56) on an inner circumferential surface, with which the ratchet catch (44, 54, 64) can be brought into engagement by a pushing and/ or rotation of the ratchet catch (44, 54, 64) effected by the centrifugal force, wherein the ratchet catch (44, 54, 64) is surrounded by the ratchet wheel (45, 55, 65).

7. Turnbuckle according to claim 5 or 6, **characterised in that** the ratchet catch (44, 54, 64) is loaded with at least one spring (48, 58, 68) acting against the centrifugal force.

8. Turnbuckle according to claim 5 or 6, **characterised in that** the ratchet catch (44) is mounted so it can be moved in a radial direction on a guide pin (47) of the housing (41), wherein the ratchet catch (44) has a recess (49) for the guide pin (47).

9. Turnbuckle according to claim 8, **characterised in that** a helical spring (48) is provided, which is arranged between the guide pin (47) and an end section (491) of the recess (49) opposite the end section (442) that has the extension (441) that can be brought into engagement with the ratchet wheel (45).

10. Turnbuckle according to one of the claims 5 to 7, **characterised in that** the ratchet catch (54) is mounted so that it can be rotated about an axle (a5) in the area of its end section (541) acting together with the ratchet wheel (55), wherein the ratchet catch (54) has a recess (59) as a slot for the guide pin (57) of the housing and an end section (542) of the ratchet catch (54) connected to the recess (59), free, opposite the end section (541) acting together with ratchet wheel has the overwhelming portion of the mass of the ratchet catch (54).

11. Turnbuckle according to one of the claims 1 to 10, **characterised in that** the winding roll (22, 32, 52) and the ratchet wheel (25, 35, 55) are realised as integral parts.

12. Turnbuckle according to one of the claims 5 to 7, 10 and 11, **characterised in that** the ratchet catch (64) is mounted so it can be moved along a guide (67) held in the housing.

13. Turnbuckle according to claim 12, **characterised in that** the guide allows a movement of the ratchet catch (64) according to a curvilinear path, on the end of which the ratchet catch (64) grips into the ratchet wheel (65) by means of at least one extension (646).

## Revendications

1. Tendeur (20, 30, 40, 50, 60) pour une chaîne à neige (1) à monter sur une roue (3) d'un véhicule, comportant un boîtier (21, 31, 41, 51) et un lien de serrage (7), propre à être tiré à travers une ouverture du boîtier vers l'intérieur du boîtier, le lien de serrage (7) étant attaché à l'intérieur du boîtier (21, 31, 41, 51) à un rouleau d'enroulement (22, 32, 52, 62), précontraint dans le sens d'enroulement et monté rotatif autour de son axe (a1), sachant que sur le rouleau d'enroulement (22, 32, 52, 62) il est prévu une roue à cliquet (25, 35, 45, 55, 65) avec au moins un cliquet d'arrêt (24, 34, 44, 54, 64) qui lui est associé et le lien de serrage (7) pouvant être bloqué dans le sens opposé à son sens de serrage, sous l'effet de l'engagement du cliquet d'arrêt (24, 34, 44, 54, 64) dans la roue à cliquet (25, 35, 45, 55, 65), **caractérisé en ce que** le cliquet d'arrêt (24, 34, 44, 54, 64), sous l'effet de la force centrifuge lors de la rotation de la roue (3), est déplacé au moins par zones vers l'extérieur hors d'une position de repos, qui est présente à l'arrêt de la roue (3) et dans laquelle ledit cliquet n'est pas en prise avec la roue à cliquet (25, 35, 45, 55, 65) et le lien de serrage (7) n'est pas bloqué, et ce mouvement provoque un engagement du cliquet d'arrêt (24, 34, 44, 54, 64) dans la roue à cliquet (25, 35, 45, 55, 65).

2. Tendeur selon la revendication 1, **caractérisé en ce que** le cliquet d'arrêt (24, 34, 44, 54) est monté de manière excentrée apte à tourner autour d'un axe (a2, a3, a5).

3. Tendeur selon la revendication 2, **caractérisé en ce qu'**une zone d'extrémité libre (342) du cliquet d'arrêt (34), laquelle ne coopère pas avec la roue à cliquet (35), est plus longue et plus massique qu'une deuxième zone d'extrémité (341) dudit cliquet d'arrêt, laquelle coopère avec la roue à cliquet (35).

4. Tendeur selon la revendication 3, **caractérisé en ce que** la roue à cliquet (25, 35) comporte une denture (26, 36) sur une surface périphérique extérieure.

5. Tendeur selon la revendication 1, **caractérisé en ce que** le cliquet d'arrêt (44, 54, 64) est réalisé en forme de plaque et comporte au moins un prolongement (441, 541, 641) pouvant être amené en prise avec la roue à cliquet (45, 55, 65).

6. Tendeur selon l'une quelconque des revendications 1 à 3 ou 5, **caractérisé en ce que** la roue à cliquet (45, 55, 65) comporte une denture (46, 56) sur une surface périphérique intérieure, avec laquelle le cliquet d'arrêt (44, 54, 64) peut être amené en prise sous l'effet d'un mouvement de translation et/ou d'un mouvement de rotation du cliquet d'arrêt (44, 54, 64), induit par la force centrifuge, le cliquet d'arrêt (44, 54, 64) étant entouré par la roue à cliquet (45, 55, 65).

7. Tendeur selon la revendication 5 ou 6, **caractérisé en ce que** le cliquet d'arrêt (44, 54, 64) est sollicité par au moins un ressort (48, 58, 68) agissant dans le sens opposé à la force centrifuge.

8. Tendeur selon la revendication 5 ou 6, **caractérisé en ce que** le cliquet d'arrêt (44) est monté de manière mobile dans le sens radial sur un téton de guidage (47) du boîtier (41), le cliquet d'arrêt (44) comportant un logement (49) pour le téton de guidage (47).

9. Tendeur selon la revendication 8, **caractérisé en ce qu'**il est prévu un ressort hélicoïdal (48), qui est disposé entre le téton de guidage (47) et une zone d'extrémité (491) de l'évidement (49), laquelle est située en face de la zone d'extrémité (442) munie du prolongement (441) pouvant être amené en prise avec la roue à cliquet (45).

10. Tendeur selon l'une quelconque des revendications 5 à 7, **caractérisé en ce que** le cliquet d'arrêt (54), dans la zone de sa zone d'extrémité (541) coopérant avec la roue à cliquet (55), est monté rotatif autour d'un axe (a5), le cliquet d'arrêt (54) comportant un évidement (59) destiné à recevoir le téton de guidage (57) du boîtier, et la zone d'extrémité (542) du cliquet d'arrêt (54), située face à la zone d'extrémité (541) libre, adjacente à l'évidement (59) et coopérant avec la roue à cliquet, comporte la majeure partie de la masse du cliquet d'arrêt (54).

11. Tendeur selon l'une quelconque des revendications 1 à 10, **caractérisé en ce que** le rouleau d'enroulement (22, 32, 52) et la roue à cliquet (25, 35, 55) sont réalisés d'un seul tenant.

12. Tendeur selon l'une quelconque des revendications 5 à 7, 10 et 11, **caractérisé en ce que** le cliquet d'arrêt (64) est monté mobile le long d'un guidage (67) maintenu dans le boîtier.

13. Tendeur selon la revendication 12, **caractérisé en ce que** le guidage autorise un mouvement du cliquet d'arrêt (64) selon une voie courbe, à une extrémité de laquelle le cliquet d'arrêt (64) s'engage avec au moins un prolongement (646) dans la roue à cliquet (65).
